# EUROPEAN PATENT APPLICATION

(11) **EP 4 343 404 A1**
(43) Date of publication of application: **27.03.2024**
(21) Application number: 22196681.5
(22) Date of filing: 20.09.2022
(51) Int. Cl.: G02B 21/26, G02B 21/36

(54) **CONTROLLER FOR AN IMAGING SYSTEM, SYSTEM AND CORRESPONDING METHOD**

(71) Applicant: Leica Microsystems CMS GmbH, 35578 Wetzlar (DE)
(72) Inventor: SCHLAUDRAFF, Falk, 35510 Butzbach (DE); KONZACK, Sven, 35305 Grünberg (DE)
(74) Representative: DehnsGermany Partnerschaft von Patentanwälten

(57) **Abstract**

The invention relates to a controller (150) for an imaging system (100) comprising an object table (130), an imaging optic (120), and an image detector (124), wherein the object table (130) is configured such that at least a part of the object table (130) is adjustable such that an alignment of a sample (132) placed thereon, relative to at least one of the imaging optic and the image detector (124), is adjustable in at least one direction, wherein the controller (150) is configured to: instruct the imaging system to image a sample placed on the object table in an overview imaging mode, to obtain overview image data (170); determine, based on a sample region (174) in the overview image data and a pre-defined alignment (154) of the sample relative to at least one of the imaging optic and the image detector (124), adjustment parameters (152) for the object table (130), for adjusting the object table (130) to achieve the pre-defined alignment of the sample, wherein the sample region (174) indicates a position of a part (172) of the sample; and provide the adjustment parameters (152) to a user or instruct the imaging system (100) to adjust the object table according to the adjustment parameters (152), for subsequent imaging the sample placed on the object table (130), within the sample region. The invention also relates to a system and a method.

## Description

### Technical Field

The present invention essentially relates to a controller for an imaging system, to a system comprising such an imaging system, e.g., a microscope, and to a corresponding method.

### Background

In the field of imaging systems or microscopy, e.g. using light or confocal microscopes, different objects or samples can be imaged. Depending on the needs, different parts or structures within a sample, e.g., a cell, a nucleus or other cell structures might be of particular interest to be imaged. Finding such specific parts or structures within a (larger) sample for imaging can be difficult and take a long time. In case the specific parts or structures of interest are found, imaging mainly these structures can be time-consuming which is disadvantageous for image acquisition of living samples or fast processes.

### Summary

In view of the situation described above, there is a need for improvement in finding specific parts of a samples for imaging and/or to decrease the image acquisition duration. According to embodiments of the invention, a controller for an imaging system, a system, and a corresponding method with the features of the independent claims are proposed. Advantageous further developments form the subject matter of the dependent claims and of the subsequent description.

An embodiment of the invention relates to a controller for an imaging system. The imaging system (with which or as part of which the controller is to be used) comprises an object table, an imaging optic, and an image detector like a sensor or a camera. In an embodiment, the imaging system can also comprise an illumination optic, including, for example, one or more objective lenses and/or other lenses and/or as well as at least one light source, such as an LED or laser. The object table is configured such that at least a part of the object table, e.g., an insert of the object table, is adjustable such that an alignment of a sample placed thereon (on the object table or the part thereof), relative to at least one of the imaging optic and the image detector, is adjustable in at least one direction. For example, the object table or the part thereof as can be adjustable, such adjustment resulting in an adjustment of a position and/or an orientation of the sample placed thereon. This, in turn, results in an adjustment of the alignment of the sample relative to the imaging optic or the image detector. An object table (also called stage) in the sense of the present application in particular can be a device for receiving a sample or a sample holder, for instance in the form of a microscope slide, a petri dish, a multi well plate or the like, and is capable to position the sample relative to the at least one of the imaging optic and the image detector. An object table in particular does not have to have a shape of a table.

The controller is configured to instruct the imaging system, e.g., by means of corresponding signals, to image a sample placed on the object table in an overview imaging mode, in order to obtain overview image data. Such overview imaging mode can comprise using an objective lens of the imaging optic having a low magnification. The controller is further configured to determine, based on a sample region in the overview image data and a pre-defined alignment of the sample, adjustment parameters for the object table, for adjusting the object table in order to achieve the pre-defined alignment of the sample. Such pre-defined alignment of the sample is defined relative to at least one of the imaging optic and the image detector. Such pre-defined alignment of the sample relative to at least one of the imaging optic and the image detector can mean that the sample is aligned based on (or is aligned with) at least one of a scanning direction of the imaging system (in case of a scanning microscope, for example), and an imaging direction of the image detector (along a detector array, for example). The sample region indicates a position of a part of the sample, e.g., within the sample and relative to the imaging system. Such sample region can comprise a specific part or structure of the sample which is of interest. The controller is further configured to provide the adjustment parameters to a user, e.g., to be presented on a display, or instruct the imaging system to adjust the object table or a part thereof according to the adjustment parameters, for subsequent imaging the sample placed on the object table, within the sample region. Providing the adjustment parameters to the user allows manual adjustment of the object table and the sample placed thereon according to user preferences, for example. Instructing the imaging system to adjust the object table or a part thereof allows automatic adjustment, e.g., without further actions by the user. In an embodiment, the controller can be configured to provide both alternatives, such that the user can choose their preference, for example.

It has turned out that different structures or parts, which are typically of interest, are often randomly oriented within the sample. This results in the difficult and lengthy finding of an optimum imaging position. With the controller of the embodiment described, a quick overview of the sample, e.g., the entire sample, can be acquired and be used for adjusting the sample (via the object table) for subsequent imaging of only the desired part thereof in correct alignment, in the sample region. This can be made with higher magnification or resolution, for example.

In an embodiment of the invention, the controller is further configured to, once or several times, after the object table has been adjusted according to the adjustment parameters (be it manually or automatically), instruct the imaging system to image the sample placed on the object table, at least within the sample region, in an intermediate imaging mode, in order to obtain intermediate image data. Further, the controller is configured to provide information about an adjustment accuracy of the adjusted object table and an invitation to check, whether or not an adjustment accuracy criterion of the adjusted object table is met with the intermediate image data to the user (for, e.g., manual check by the user), or (e.g., automatically) check, whether the adjustment accuracy criterion of the adjusted object table is met with the intermediate image data. Further, the controller is configured to, if the adjustment accuracy criterion is not met, refine, based on the sample region in the intermediate image data and the pre-defined alignment of the sample, the adjustment parameters for the object table; and provide the (refined) adjustment parameters to the user or instruct the imaging system to adjust the object table according to the (refined) adjustment parameters, for subsequent imaging the sample placed on the object table, within the sample region. If the adjustment criterion is met, no further action is required with respect to adjustment. This allows a further optimization of the adjustment of the sample for subsequent imaging, in order to allow the final and desired imaging with, e.g., a high spatial or temporal resolution, and/or as fast as possible.

According to a further embodiment of the invention, the controller is further configured to, after the object table has been adjusted according to the adjustment parameters (be it manually or automatically; and be it the initial adjustment parameters, if no refinement step is included, or the refined adjustment parameters), instruct the imaging system to image the sample placed on the object table, within the sample region, in a final imaging mode, in order to obtain final image data. In this way, the final image data comprises the part or structure of interest only (or with some additional margin, for example) and, thus, can be acquired very quickly. According to a further embodiment of the invention, the final image mode comprises imaging the sample essentially only within the sample region.

According to a further embodiment of the invention, the final image mode comprises imaging with higher resolution, preferably with higher spatial and/or temporal resolution, than in the overview imaging mode. In addition, a higher magnification than in the overview imaging mode can be used; this can include using an objective lens of the imaging optic having a high magnification (i.e., a higher magnification as the one for the overview imaging mode), or with a zoom optic or an electronic zoom, for example. This results in a very detailed image of only the desired part of the sample, which also has then been acquired very quickly.

According to a further embodiment of the invention, the controller is further configured to provide the overview image data and an invitation to input information about the sample region to the user; this can be enabled, e.g., via a display. The controller is further configured to receive the information about the sample region, e.g., from the user, via user input. In this way, the user can choose a desired sample region on his own, e.g., via drawing a boundary around the structure of interest on the display, which shows the overview image.

According to a further embodiment of the invention, the controller is further configured to determine one or more preliminary sample regions based on the overview image data, and to provide the one or more preliminary sample regions and an invitation to select the one or one of the more preliminary sample regions as the sample region to the user, in order to receive the information about the sample region. In this way, automatic suggestions of sample regions of potential interest can be made to the user. The user can then select a desired one of the preliminary sample regions as the one to be used.

According to a further embodiment of the invention, the controller is further configured to adjust the sample region, based on the information about the sample region and the first image data; this can be made automatically. Adjusting the sample region, in an embodiment, comprises improving the sample region, e.g., with respect to at least one of a position, a size of a preliminary sample region, a pre-defined alignment of the sample. This results in a more specified sample region and, thus, in a more precise and faster imaging in the final imaging mode, for example.

According to a further embodiment of the invention, the object table is configured such that the at least one direction in which the alignment of the sample is adjustable, comprises at least two different translational directions, and at least two rotational directions. In an embodiment, these can be three different translational directions and/or three different rotational directions. The different (translational and/or rotational) directions in particular are orthogonal or linearly independent to each other in the mathematic sense. The adjustment parameters are based on the least one of the two (or three) different translational directions, and on at least one of the two (or three) different rotational directions. In an embodiment, the adjustment parameters are based on two or three different translational directions and/or on two or three different rotational directions. Examples of an object table allowing such adjustments will be explained with respect to the Figs. In this way, the sample can be adjusted as exactly as possible.

According to a further embodiment of the invention, the object table comprises an insert onto which the sample is to be placed, wherein the insert is rotatable within the object table. Further, the object table is configured such that the insert is adjustable such that the sample is adjustable in the at least two (or three) different rotational directions. In an embodiment, the object table is configured such that the object table as such or platform (which might include the insert) is adjustable such that the sample is adjustable in the at least two (or three) different translational directions. The insert can be rotatable in one, two or three different rotational directions within the object table or the platform thereof. Such object table allows efficient and quick adjustment of the sample in the different directions.

According to a further embodiment of the invention, the imaging system is configured as a microscope or as a confocal scanning microscope or as a confocal line scanning microscope. This allows quick and efficient, high-resolution imaging of microscopic or biological samples, for example.

Another embodiment of the invention relates to a system comprising an imaging system the controller of any embodiment as described above. This means that the imaging system, in an embodiment, can be configured as a microscope or as a confocal scanning microscope or as a confocal line scanning microscope. The imaging system comprises an object table, an imaging optic, and an image detector. Optionally, the imaging system can comprise an illumination optic.

Another embodiment of the invention relates to a method for imaging a sample, by means of an imaging system. The imaging system comprises an object table, an imaging optic, an image detector, and, optionally an illumination optic. The object table is configured such that an alignment of a sample placed thereon, relative to at least one of the imaging optic and the image detector, is adjustable in at least one direction. The method comprising the following steps: imaging the sample placed on the object table in an overview imaging mode, in order to obtain overview image data; determining, based on a sample region in the overview image data and a pre-defined alignment of the sample, adjustment parameters for the object table, for adjusting the object table in order to achieve the pre-defined alignment of the sample, wherein the sample region indicates a position of a part of the sample; and providing the adjustment parameters to a user or adjusting the object table according to the adjustment parameters, for subsequent imaging the sample placed on the object table. For further embodiments and advantages of the method it shall be referred to the description of the controller above, which applies here correspondingly.

Another embodiment of the invention relates to a computer program with a program code for performing the following steps, when the computer program is run on a processor or a controller of an imaging system. The imaging system comprises an object table, an imaging optic, an image detector, and, optionally, an illumination optic. The object table is configured such that an alignment of a sample placed thereon, relative to at least one of the imaging optic and the image detector, is adjustable in at least one direction. These steps are: instructing the imaging system to image a sample placed on the object table in an overview imaging mode, in order to obtain overview image data; determining, based on a sample region in the overview image data and a pre-defined alignment of the sample, adjustment parameters for the object table, for adjusting the object table in order to achieve the pre-defined alignment of the sample relative to at least one of the imaging optic and the image detector, wherein the sample region indicates a position of a part of the sample; and providing the adjustment parameters to a user or instructing the imaging system to adjust the object table according to the adjustment parameters, for subsequent imaging the sample placed on the object table. For further embodiments and advantages of the computer program it shall be referred to the description of the controller above, which applies here correspondingly.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short description of the Figures

- Fig. 1a: schematically shows an imaging system according to an embodiment of the invention;
- Fig. 1b: schematically shows an alignment of a sample;
- Fig. 2a: schematically shows an object table according to an embodiment of the invention;
- Fig. 2b: schematically shows the object table of Fig 2a in a different situation;
- Fig. 2c: schematically shows the object table of Fig 2a in a further different situation;
- Fig. 3: schematically shows an object table according to a further embodiment of the invention; and
- Fig. 4: schematically a method according to an embodiment of the invention in a flow diagram.

### Detailed Description

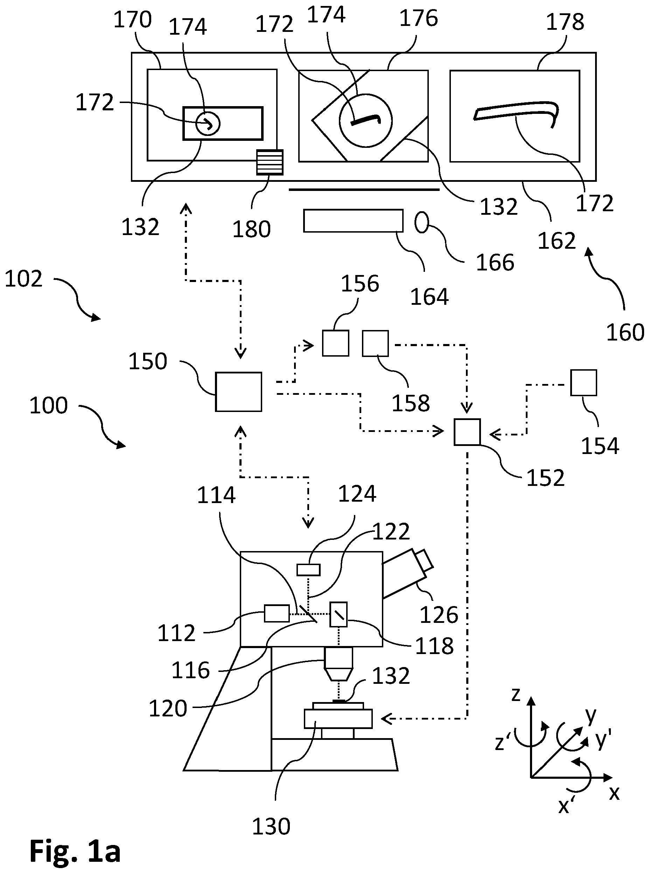

Fig. 1a schematically illustrates a system 102 according to an embodiment of the invention. The system 102 comprises an imaging system 100. In an embodiment, the imaging system 100 is configured as a microscope. Further, the system 102 comprises a controller 150 according to another embodiment of the invention. System 102 or imaging system 100 can be used for performing a method according to an embodiment of the invention.

The imaging system 100 comprises an object table 130, an imaging optic 120, and an image detector 124 like a camera or a sensor, e.g., a CMOS sensor. In an embodiment, the imaging system 100 also comprises an illumination optic 112 (e.g., comprising a light source) for generating an illumination light beam 114. The illumination light beam 114 can be directed, via a reflector 118, to the imaging optic 120 (e.g., comprising an objective lens) and then, to a sample or microscopic sample 132, which can be placed on the object table 130.

Light reflected or excited from the microscopic sample 132 is directed, as an imaging light beam 122, via the imaging optic 120, the reflector 118 and a further reflector 116 to the image detector 124. Imaging system 100 can, in addition, comprise an optional eyepiece 126 for a user to inspect the sample 132.

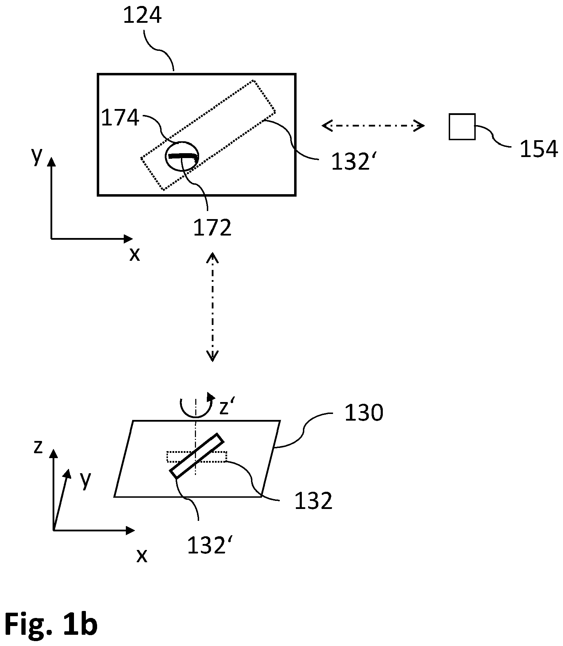

Note that instead of incident illumination as illustrated in Fig. 1, transmitted light illumination could be used. In the latter case, the illumination light beam would illuminate the sample from below the sample 132. In an embodiment, the reflector 118 can be configured as a scanning mirror, for example, in case the imaging system 100 is configured as a scanning confocal microscope. In an embodiment, reflector or scanning mirror 118 is comprised by imaging optic 120

The object table 130 is configured such that at least a part of the object table 130 is adjustable such that an alignment of the sample 132 placed thereon, relative to the imaging optic 120 and/or the image detector 124, is adjustable in at least one direction of the sample. By means of example, three different translational directions x, y, z, e.g., in a cartesian coordinate system, and three different rotation directions x', y', z', e.g., each about a corresponding axis of the cartesian coordinate system, are illustrated. Further details and embodiments of such an object table will be explained later.

By means of example, such alignment is illustrated in Fig. 1b. The upper part of Fig. 1b shows an imaged / projected image of the sample 132 onto the detection area of the image detector 124 wherein the detection area is located in the x-y-plane. The lower part of Fig. 1b shows a perspective view of the object table 130 with an upper surface also being located in the x-y-plane. Note that this is for illustration purposes only, the image detector might be orientated differently; this might require using two different coordinate systems with a specific relation to each other.

The sample 132 is placed on the object table 130. For example, the sample 132 can be placed on the object table 130 such that it is oriented along the x-direction, as illustrated for the sample 132 in the lower part of Fig. 1b. As mentioned above, certain structures of interest within the sample 132 can be oriented randomly within the sample 132. Such structure is illustrated with part 172 in the upper part of Fig. 1b.

In this example, optimal imaging of the part or structure 172, which is an elongated structure here, might require that the part 172 is oriented along the x-direction of the image detector 124; this x-direction could be a scanning direction. Since the part 172 can randomly be oriented within the sample 132, the current orientation of the sample 132, as indicated in the lower part of Fig. 1b, is not the desired one. Rather, the alignment of the sample relative to the image detector 124 should be as shown with sample 132' in the upper part of Fig. 1b. This corresponds to a pre-defined alignment 154 of the sample relative to the image detector 124, in this example. It is noted that such pre-defined alignment 154 will be apparent, for example, after a sample region 172, indicating the relevant part 172, has been identified.

In order to achieve this pre-defined alignment 154, the sample 132 should be rotated around the z-axis, i.e., adjusted in z' direction, as illustrated in the lower part of Fig. 1b, such that the desired orientation of the part 172 is achieved and/or such that a fast readout of the image information can be achieved. It is noted that also movement of the sample 132 in x and y direction, for example, might be required in order to bring the part 172 being the image of the sample 132 into a center region of image detector 124 (if this is a requirement for optimal imaging). Also, rotation around the x and/or y axis might be required.

Returning to Fig. 1a, in addition, a user interface system 160 comprising, by means of example, a display 162, a keyboard 164 and a computer mouse 166, is illustrated. In an embodiment, the system 102 or the imaging system 100 comprises the user interface system 160. Alternatively, the user interface system 160 can be provided separately. The controller 150 can be configured to provide image data to the user interface system 160 such that corresponding images can be displayed to a user on the display 162 and the controller 150 can also be configured to receive user input from the user interface system 160, e.g., via the keyboard 164 and/or the computer mouse 166. The display 162 can also be configured as a touch display; then, the controller 150 might also receive user input from the display 162.

The controller 150 is configured to instruct the imaging system 100 to image the sample 132 placed on the object table 130 at least in an overview imaging mode, in order to obtain overview image data. The controller 150, thus, can receive this overview image data. This can include generating a signal for controlling the illumination optic 112 and/or the image detector 124 in order to illuminate the sample 132 and to acquire images or image data from the sample 132. This can also include controlling the imaging system 100 to adjust and/or change the imaging optic 120, for example. In order to image the sample 132 in the overview imaging mode, for example, the imaging system 100 can be instructed to choose a low magnification with corresponding imaging optic.

By means of example, such overview image data 170, showing the sample, is shown as an image on the display 162. It can be seen that the alignment of the sample 132 does not correspond to the pre-defined alignment, as explained with respect to Fig. 1b. The controller 150 is further configured to determine, based on a sample region 174 in the overview image data 170 and the pre-defined alignment 154 of the sample 132, adjustment parameters 152 for the object table 130, for adjusting the object table 130 in order to achieve the pre-defined alignment 154 of the sample 132 relative to, e.g., the image detector 124. Note that such pre-defined alignment could also be defined in relation to the imaging optic 120, or the scanning unit thereof, for example. The sample region 174 indicates a position of the part 172 of the sample 132. The part 172 can, for example, be a structure of interest within the sample 132 that shall later be imaged in detail.

The pre-defined alignment 154 can comprise, for example, a specific orientation and/or position of the sample or a part thereof, for example the part 172, which is indicated by the sample region 174, with respect to the image detector 124, as mentioned with respect to Fig. 1b. This, for example, can be of particular relevance if the imaging system 100 is configured as a scanning confocal microscope. In this case, the part 172 should be in the so-called sweet spot of the imaging system 100, e.g. the part 172 should, for example, best be aligned with the scanning direction (see also Fig. 1b). The part 172 being in the sweet spot can mean, for example, that the imaging system 100 is provided in an optimum and/or best suited setting for imaging the part 172, and/or to achieve a (very) fast data acquisition.

The pre-defined alignment 154 can, for example, also comprise that a (fast) movement and/or other change of the sample does not destructively interact with the imaging or data acquisition process. Destructive interaction might result in artefacts which can be prevented in this way. For example, a preferred imaging or scanning direction can be aligned with a rotating or otherwise moving sample such that the sample is always imaged in the same way and/or the same situation.

From the overview image data 170 and the sample region 174, the current alignment of the sample 132 relative to at least one of the imaging optic 120 and/or the image detector 124 can be determined or calculated, for example, by means of the controller 150. This can be based on image analysis and knowledge about the imaging system configuration, like e.g. the magnification of the imaging optic 120 and therefore the relationship of an object size of a part of the object and the size of the image of this part of the object, for example. Based on this current alignment and the known pre-defined alignment 154, the adjustment parameters 152 can be determined. This can be based, for example, on a difference between the current and the pre-defined alignment (with their respective parameters) and a configuration and/or geometry of the object table 130. This means that, for example, it has to be considered by means of which action (like translation or rotation) of the table the sample can be adjusted in which direction.

In an embodiment, the controller is further configured to provide the overview image data 170 and an invitation to input information about the sample region 174 to the user; such invitation can include a prompt 180 on the display 162, for example. The user can then input information about the sample region, for example, by drawing a boundary around the part 172, using the computer mouse 166. The controller is configured to receive this information about the sample region and can, then, determine the adjustment parameters 152 as described above.

In an embodiment, the controller 150 is further configured to determine one or more preliminary sample regions based on the overview image 170; and provide the one or more preliminary sample regions and an invitation to select the one or one of the more preliminary sample regions as the sample region to the user, in order to receive the information about the sample region. This can be performed automatically by the controller 150, e.g., based on machine-learning algorithms or artificial intelligence. In this way, one or more preliminary sample regions similar to the sample region 174, for example, can be displayed on the display 162. The invitation can include a prompt on the display 162. The user can then input information about which of the preliminary sample regions to choose, by clicking on the corresponding one, using the computer mouse 166, for example.

In an embodiment, the controller 150 is further configured to adjust the sample region 174, based on the information about the sample region, like received via user input, and the overview image data 170. This can, e.g., be based on machine-learning algorithms or artificial intelligence. For example, the controller can automatically adapt the sample region 174 to the selected one of the preliminary sample regions. For example, the controller can adapt the size and/or the position of the sample region 174 to the part 172; this can, for example, be the case if the user draws a rough boundary around the part 172 and the controller determines, based, e.g., on image analysis, the specific contours of the part 172. For example, the pre-defined alignment can also be adjusted; this can be the case, if the user changes imaging parameters, for example.

In an embodiment, the controller 150 is further configured to determine the sample region 174 based on the overview image data 170. This can, for example, be performed in that the controller determines, based on image analysis, the specific contours of the part 172 and provides a suggestion of such sample region 174.

Further, the controller 150 is configured to provide the adjustment parameters 152 to the user or instruct the imaging system 100 to adjust the object table 130 according to the adjustment parameters 152, for subsequent imaging the sample 132, within the sample region 174. Providing the adjustment parameters to the user can include, for example, displaying specific values for specific adjusting knobs of the object table, for example, on the display 162. This can also include a request to the user to adjust the object table manually and, for example, to confirm adjustment after having adjusted the object table 130.

Instructing the imaging system 100 to adjust the object table 130 according to the adjustment parameters 152 can include, for example, sending one or more signals to one or more actuators configured for adjusting the object table 130.

In an embodiment, the controller 150 is further configured to, once or several times, after the object table 130 has been adjusted according to the adjustment parameters 152, instruct the imaging system 100 to image the sample 132 placed on the object table 130, at least within the sample region 174, in an intermediate imaging mode, in order to obtain intermediate image data 176. This can be performed, for example, like in the overview imaging mode for the overview imaging data 170. However, a smaller part of the sample than for the overview image data can be imaged, for example. In addition, a different resolution for imaging and/or a different magnification can be used in the intermediate imaging mode. However, also the same settings as for the overview imaging mode can be used.

By means of example, such intermediate imaging data 176, showing part of the sample, is shown as an image on the display 162. It can be seen that the current alignment of the sample 132 does not yet correspond to the pre-defined alignment, as explained with respect to Fig. 1b, but it is much better than for the overview image data 170.

The controller 150 is further configured to provide information 156 about an adjustment accuracy of the adjusted object table 130 and an invitation to check, whether or not an adjustment accuracy criterion 158 of the adjusted object table is met with the intermediate image data 176 to the user; this can include a prompt to the user displayed on the display 162. The controller 150 can also be configured to (automatically) check, whether the adjustment accuracy criterion 158 of the adjusted object table is met with the intermediate image data 176. Such adjustment accuracy criterion 158 can comprise, for example, a range within which the current alignment may deviate from the pre-defined alignment. For example, the accuracy criterion can be considered to be met if the current alignment deviates less than +/- 5% from the pre-defined alignment. Depending on the adjustment accuracy criterion 158, the alignment shown for intermediate image data 176 can or cannot be met.

Further, the controller 150 is configured to, if the adjustment accuracy criterion is not met, refine, based on the sample region 174 in the intermediate image data 176 and the pre-defined alignment 154 of the sample, the adjustment parameters 152 for the object table. Further, the controller 150 is configured to provide the (refined) adjustment parameters 152 to the user or instruct the imaging system 100 to adjust the object table130 according to the (refined) adjustment parameters 152, for subsequent imaging the sample placed on the object table, within the sample region. This further provision of (refined) adjustment parameters or further (automatic) adjustment can be performed, for each instance, like the initial adjustment. These steps can be repeated, for example, until the adjustment accuracy criterion 158 is met and/or unit a certain number of repetitions has been reached.

In an embodiment, the controller 150 is further configured to, after the object table 130 has been adjusted according to the adjustment parameters, instruct the imaging system 100 to image the sample 132 placed on the object table 130, within the sample region 174, in a final imaging mode, in order to obtain final image data 178. By means of example, such final imaging data 178, showing the part 172 of interest, is shown as an image on the display 162.

In an embodiment, the final image mode comprises imaging with higher resolution, preferably with at least one of higher spatial and temporal resolution, than in the overview imaging mode. In an embodiment, the final image mode comprises imaging the sample 132 essentially only within the sample region 174.

In this way, high-resolution final image data of only the part 172 of interest of the sample can very quickly be obtained, without imaging unnecessary parts of the sample with high resolution and/or with inaccurate alignment of the sample.

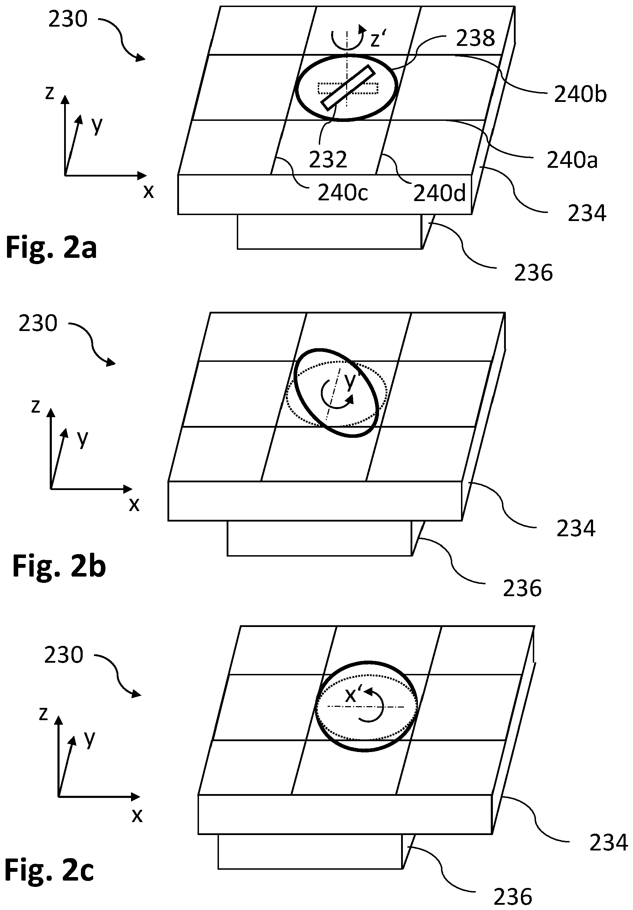

Fig. 2a schematically illustrates an object table 230 according to an embodiment of the invention. The object table 230 can be used with imaging system 100 of Fig. 1 and also corresponds to object table 130 of Fig. 1. In an embodiment, the object table 230 comprises a platform 234 and an actuator 236. The object table 230 further comprises, in an embodiment, an insert 238 arranged within the platform 234. The insert 238 can be the part of the object table 230 onto which a sample is to be placed. By means of example, a sample 232 is shown being placed on the insert 238.

By means of the actuator 236, for example, the platform 234 can be moved in, for example, three different translational directions x, y, z. It is noted that moving the platform in z direction typically is used for focusing. By moving the platform 234 in one or more of these three different translational directions x, y, z, the corresponding translational directions the sample 232 relative to, for example, the imaging optic and/or the image detector are moved. In this way, an adjustment of the object table can result in adjusting an alignment of the sample 232 in translational degrees of freedom (see also Fig. 1b).

In an embodiment, the object table 230 comprises holding and/or adjustment rods 240a, 240b, 240c, 240d for holding and/or rotating (adjusting) the insert 238. In an embodiment, in addition or alternatively, a frame or mechanism similar to that used a gyroscope can be comprised by the object table 230 in order to hold and adjust the insert 230. The holding and/or adjustment rods 240a, 240b, 240c, 240d and/or the insert 238 can comprise scales, for example, in order to allow manual adjustment according to determined adjustment parameters.

In this way, the insert 238 can be rotated, with respect to the platform 234, in, for example, three different rotational directions x', y', z'. By means of example, the three different rotational directions x', y', z' are illustrated as rotational directions about a respective axis oriented in one of the three different translational directions x, y, z. By means of example, a rotational movement of the insert 238 in rotational direction z' is illustrated in Fig. 2a. Such rotational movement results in the adjustment of the alignment of the sample 232 relative to, for example, the imaging optic and/or the image detector in this rotational direction (see also Fig. 1b).

Fig. 2b schematically illustrates the object table 230 of Fig 2a in a different situation. By means of example, a rotational movement of the insert 238 in rotational direction y' is illustrated in Fig. 2b. Such rotational movement results in the adjustment of the alignment of the sample 232 relative to, for example, the imaging optic and/or the image detector in this rotational direction.

Fig. 2c schematically illustrates the object table 230 of Fig 2a in a further different situation. By means of example, a rotational movement of the insert 238 in rotational direction x' is illustrated in Fig. 2c. Such rotational movement results in the adjustment of the alignment of the sample 232 relative to, for example, the imaging optic and/or the image detector in this rotational direction. In addition, and by means of example, a lateral displacement of the platform 234 relative to the actuator 236 in x direction is illustrated.

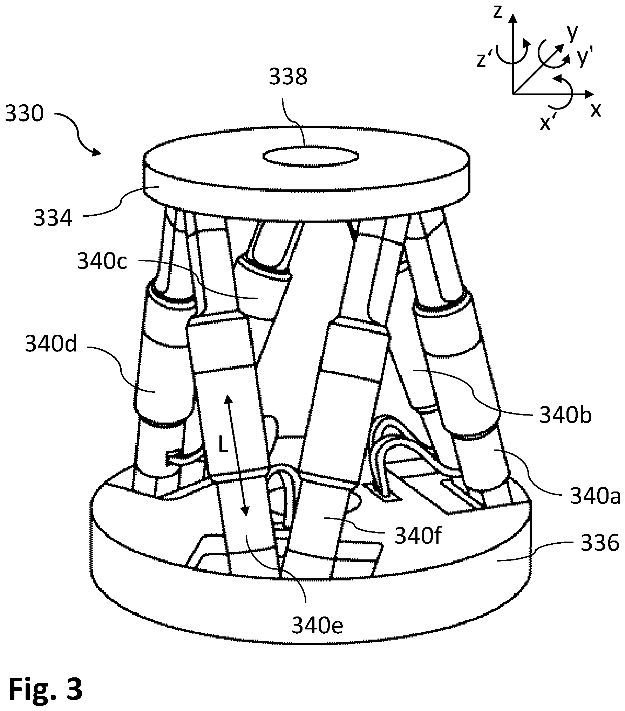

Fig. 3 schematically illustrates an object table 330 according to an embodiment of the invention. The object table 330 can be used with imaging system 100 of Fig. 1. In an embodiment, the object table 330 comprises a platform 334 and a bottom plate 336. The object table 330 further comprises, in an embodiment, an insert 338 arranged within the platform 334. The insert 338 can be the part of the object table 330 onto which a sample is to be placed.

Further, the object table 330 comprises six rod shaped actuators 340a, 340b, 340c, 340d, 340e, 340d. Each of these actuators can, for example, be extendable and retractable in a longitudinal direction L. This can be similar to the function of a hydraulic cylinder, for example. These six rod shaped actuators 340a, 340b, 340c, 340d, 340e, 340d can be hydraulic actuators or electric actuators. In this way, the platform 234 can be moved in any of the three different translational directions x, y, z, and in any of the three different rotational directions x', y', z'. This kind of object table is also called a hexapod.

It is noted that this object table 330 allows the mentioned movement in the six degrees of freedom even without the insert 338; this means that the insert 338 could also be omitted. Nevertheless, such insert 338 enhances the extent (angles) of rotational movements. In this case, the insert 338 can be similar to the insert 238 shown in Figs. 2a to 2c.

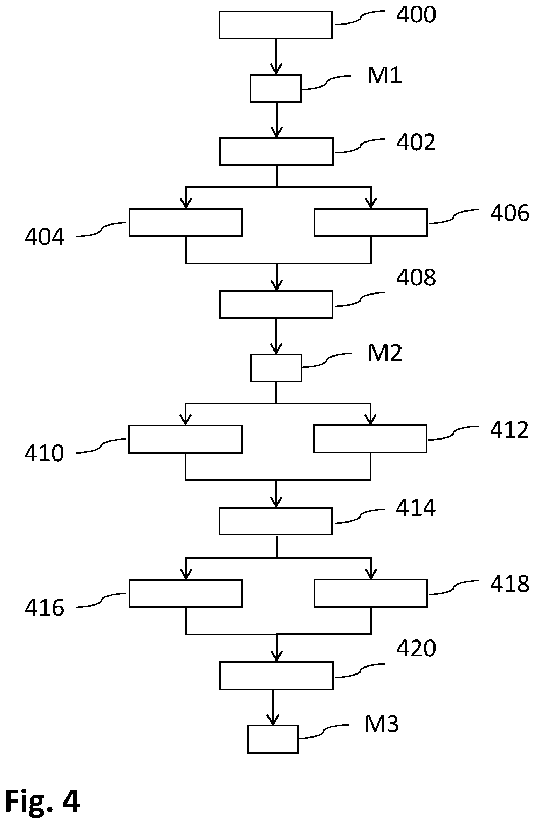

Fig. 4 schematically illustrates a method according to an embodiment of the invention in a flow diagram. The method relates to the imaging a sample, by means of an imaging system. The imaging system comprises an object table, an imaging optic and an image detector. The object table is configured such that at least a part of the object table is adjustable such that an alignment of a sample placed thereon, relative to at least one of the imaging optic) and the image detector, is adjustable in at least one direction. For example, the system 102 or the imaging system 100 in any of the embodiments described above can be used.

In a step 400, the sample placed on the object table is imaged in an overview imaging mode M1, in order to obtain overview image data like overview image data 170 of Fig. 1a.

In step 402, adjustment parameters for the object table like adjustment parameters 154 of Fig. 1a are determined, based on a sample region in the overview image data and a pre-defined alignment of the sample relative to at least one of the imaging optic and the image detector. These adjustment parameters are intended for adjusting the object table in order to achieve the pre-defined alignment of the sample. The sample region indicates a position of a part of the sample.

In step 404, the adjustment parameters are provided to a user. The user can then manually adjust the object table. Alternatively, in step 406, the object table (automatically) is adjusted according to the adjustment parameters, for subsequent imaging the sample placed on the object table.

In optional step 408, the imaging system is instructed to image the sample placed on the object table), at least within the sample region, in an intermediate imaging mode M2, in order to obtain intermediate image data like intermediate image data 176 shown in Fig. 1b. Then, in step 410, information about an adjustment accuracy of the adjusted object table and an invitation to check, whether or not an adjustment accuracy criterion of the adjusted object table is met with the intermediate image data, is provided to the user. Alternatively, in step 412, it is (automatically) checked, whether the adjustment accuracy criterion of the adjusted object table is met with the intermediate image data.

If the adjustment accuracy criterion is not met, in step 414, the adjustment parameters for the object table are refined, based on the sample region in the intermediate image data and the pre-defined alignment of the sample. In step 416, the (refined) adjustment parameters are provided to the user. Alternatively, in step 418, the imaging system is instructed to adjust the object table according to the (refined) adjustment parameters, for subsequent imaging the sample placed on the object table, within the sample region. These steps 408 to 416 or 418 can be repeated unit the adjustment accuracy criterion is met, for example, or a pre-defined number of times.

In optional step 420, after the object table has been adjusted according to the (initial or refined) adjustment parameters, the imaging system is instructed to image the sample placed on the object table, within the sample region, in a final imaging mode M3, in order to obtain final image data. The final image data can have higher resolution than the overview image data, as mentioned above.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to an imaging system or a microscope comprising a system as described in connection with one or more of the Figs. 1a to 4. Alternatively, an imaging system or a microscope may be part of or connected to a system as described in connection with one or more of the Figs. 1a to 4. Fig. 1a shows a schematic illustration of a system 102 configured to perform a method described herein. The system 100 comprises an imaging system or a microscope 100 and a computer system or controller 150. The imaging system or microscope 100 is configured to take images and is connected to the computer system or controller 150. The computer system 150 is configured to execute at least a part of a method described herein. The computer system 150 may be configured to execute a machine learning algorithm. The computer system 150 and imaging system or microscope 100 may be separate entities but can also be integrated together in one common housing. The computer system 150 may be part of a central processing system of the imaging system or microscope 100 and/or the computer system 150 may be part of a subcomponent of the imaging system or microscope 100, such as a sensor, an actor, a camera or an illumination unit, etc. of the imaging system or microscope 100.

The computer system 150 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 150 may comprise any circuit or combination of circuits. In one embodiment, the computer system 150 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system X20 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 150 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 150 may also include a display device, one or more speakers, and a keyboard and/or controller, which can include a mouse, trackball, touch screen, voice-recognition device, or any other device that permits a system user to input information into and receive information from the computer system 150.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100: imaging system
- 102: system
- 112: illumination optic
- 114: illumination light beam
- 116,118: reflector
- 120: imaging optic
- 122: imaging light beam
- 124: image detector
- 126: eyepiece
- 130, 230, 330: object table
- 132, 132', 232: sample

- 150: controller
- 152: adjustment parameters
- 154: pre-defined adjustment
- 156: information
- 158: adjustment accuracy criterion

- 160: user interface system
- 162: display
- 164: keyboard
- 166: computer mouse

- 170: overview image data
- 172: part of the sample
- 174: sample region
- 176: intermediate image data
- 178: final image data
- 180: prompt

- 234,334: platform
- 236: actuator
- 238,338: insert
- 240a, 240b, 240c, 240d: holding and/or adjustment rods

- 336: bottom plate
- 340a, 340b, 340c, 340d, 340e, 340f: rod shaped actuators

- 400-420: methods steps

- M1: overview imaging mode
- M2: intermediate imaging mode
- M3: final imaging mode

- x, y, z: translational directions
- x', y', z': rotational directions

## Claims

1. A controller (150) for an imaging system (100), wherein the imaging system (100) comprises an object table (130, 230, 330), an imaging optic (120), and an image detector (124), wherein the object table (130, 230, 330) is configured such that at least a part of the object table (130, 230, 330) is adjustable such that an alignment of a sample (132, 232) placed thereon, relative to at least one of the imaging optic and the image detector (124), is adjustable in at least one direction (x, y, z, x', y', z'), wherein the controller (150) is configured to:
instruct the imaging system (100) to image a sample (132, 232) placed on the object table (130, 230, 330) in an overview imaging mode (M1), in order to obtain overview image data (170);
determine, based on a sample region (174) in the overview image data (170) and a pre-defined alignment (154) of the sample (132, 232) relative to at least one of the imaging optic and the image detector (124), adjustment parameters (152) for the object table (130, 230, 330), for adjusting the object table (130, 230, 330) in order to achieve the pre-defined alignment (154) of the sample (132, 232), wherein the sample region (174) indicates a position of a part (172) of the sample; and
provide the adjustment parameters (152) to a user or instruct the imaging system (100) to adjust the object table (130, 230, 330) according to the adjustment parameters (152), for subsequent imaging the sample (132, 232) placed on the object table (130, 230, 330), within the sample region (174).

2. The controller (150) of claim 1, further configured to, once or several times, after the object table has been adjusted according to the adjustment parameters (152):
instruct the imaging system (100) to image the sample (132, 232) placed on the object table (130, 230, 330), at least within the sample region (174), in an intermediate imaging mode (M2), in order to obtain intermediate image data (176),
provide information (156) about an adjustment accuracy of the adjusted object table and an invitation to check, whether or not an adjustment accuracy criterion (158) of the adjusted object table (130, 230, 330) is met with the intermediate image data (176) to the user, or check, whether the adjustment accuracy criterion of the adjusted object table (130, 230, 330) is met with the intermediate image data (176); and
if the adjustment accuracy criterion is not met:
refine, based on the sample region (174) in the intermediate image data (176) and the pre-defined alignment (154) of the sample (132, 232), the adjustment parameters for the object table; and
provide the adjustment parameters (152) to the user or instruct the imaging system (100) to adjust the object table (130, 230, 330) according to the adjustment parameters (154), for subsequent imaging the sample (132, 232) placed on the object table, within the sample region (174).

3. The controller (150) of claim 1 or 2, further configured to, after the object table has been adjusted according to the adjustment parameters (154):
instruct the imaging system (100) to image the sample (132, 232) placed on the object table (130, 230, 330), within the sample region (174), in a final imaging mode (M3), in order to obtain final image data (178).

4. The controller (150) of claim 3, wherein the final image mode comprises imaging with higher resolution, preferably with at least one of higher spatial and temporal resolution, than in the overview imaging mode.

5. The controller (150) of claim 3 or 4, wherein the final image mode comprises imaging the sample (132, 232) essentially only within the sample region (174).

6. The controller (150) of any one of the preceding claims, further configured to:
provide the overview image data (170) and an invitation to input information about the sample region (174) to the user; and
receive the information about the sample region.

7. The controller (150) of claim 6, further configured to:
determine one or more preliminary sample regions based on the overview image data (170); and
provide the one or more preliminary sample regions and an invitation to select the one or one of the more preliminary sample regions as the sample region (174) to the user, in order to receive the information about the sample region.

8. The controller (150) of claim 6 or 7, further configured to: adjust the sample region (174), based on the information about the sample region and the overview image data (170).

9. The controller (150) of any one of the preceding claims, further configured to: determine the sample region (174) based on the overview image data (170).

10. The controller (150) of any one of the preceding claims, wherein the pre-defined alignment (154) of the sample (132, 232) relative to at least one of the imaging optic and the image detector comprises the sample (132, 232) is aligned based on at least one of a scanning direction of the imaging system, and an imaging direction of the image detector, in particular to achieve high speed image acquisition.

11. The controller (150) of any one of the preceding claims, wherein the object table (130, 230, 330) is configured such that the at least one direction in which the alignment of the sample is adjustable, comprises at least two different translational directions (x, y, z), and at least two different rotational directions (x', y', z'); and
wherein the adjustment parameters (152) are based on at least one of the two different translational directions, and on at least one of the two different rotational directions.

12. The controller (150) of claim 11, wherein the object table (230, 30) comprises an insert (238, 338) onto which the sample (232) is to be placed, wherein the insert (238, 338) is rotatable within the object table (230, 330), and
wherein the object table is configured such that the insert (238, 338) is adjustable such that the sample (232) is adjustable in the at least two different rotational directions (x' y', z').

13. The controller (150) of any one of the preceding claims, wherein the imaging system (100) is configured as a microscope or as a confocal scanning microscope or as a confocal line scanning microscope.

14. A system (102) comprising an imaging system (100) and the controller (150) of any one of the preceding claims, the imaging system (100) comprising an object table (130, 230, 330), an imaging optic (120) and an image detector (124).

15. A method for imaging a sample (132, 232), by means of an imaging system (100), wherein the imaging system (100) comprises an object table (130, 230, 330), an imaging optic (120) and an image detector (124), wherein the object table (130, 230, 330) is configured such that at least a part of the object table (130, 230, 330) is adjustable such that an alignment of a sample (132, 232) placed thereon, relative to at least one of the imaging optic (120) and the image detector (124), is adjustable in at least one direction (x, y, z, x', y', z'), the method comprising the following steps:
Imaging (400) the sample (132, 232) placed on the object table (130, 230, 330) in an overview imaging mode (M1), in order to obtain overview image data (170);
Determining (402), based on a sample region (174) in the overview image data (170) and a pre-defined alignment (152) of the sample (132, 232) relative to at least one of the imaging optic (120) and the image detector (124), adjustment parameters (154) for the object table (130, 230, 330), for adjusting the object table (130, 230, 330) in order to achieve the pre-defined alignment (152) of the sample (132, 232), wherein the sample region (174) indicates a position of a part (172) of the sample; and
Providing (404) the adjustment parameters (152) to a user or adjusting (406) the object table (130, 230 330) according to the adjustment parameters, for subsequent imaging the sample (132) placed on the object table (130).

16. A computer program with a program code for performing the following steps, when the computer program is run on a processor or a controller (150) of an imaging system (100), wherein the imaging system (100) comprises an object table (130, 230, 330), an imaging optic (120) and an image detector (124), wherein the object table (130, 230, 330) is configured such that at least part of the object table (130, 230, 330) is adjustable such that an alignment of a sample (132) placed thereon, relative to at least one of the imaging optic and the image detector (124), is adjustable in at least one direction (x, y, z, x', y', z'):
instructing the imaging system (100) to image a sample (132, 232) placed on the object table (130, 230, 330) in an overview imaging mode (M1), in order to obtain overview image data (170);
determining, based on a sample region (174) in the overview image data (170) and a pre-defined alignment (154) of the sample (132), adjustment parameters (152) for the object table (130), for adjusting the object table (130, 230, 330) in order to achieve the pre-defined alignment (154) of the sample (132, 232), wherein the sample region (174) indicates a position of a part (172) of the sample; and
providing the adjustment parameters (154) to a user or instructing the imaging system (100) to adjust the object table (130, 230, 330) according to the adjustment parameters, for subsequent imaging the sample (132, 232) placed on the object table (130, 230, 330).
